# EUROPEAN PATENT APPLICATION

(11) **EP 3 992 535 A1**
(43) Date of publication of application: **04.05.2022**
(21) Application number: 20215076.9
(22) Date of filing: 17.12.2020
(51) Int. Cl.: F24F 8/108, F24F 8/15, F24F 8/80, F24F 13/28, B01D 46/00, B01D 53/04

(54) **AIR PURIFIER**

(30) Priority: 03.11.2020 WO PCT/CN2020/126253
(71) Applicant: Koninklijke Philips N.V., 5656 AG Eindhoven (NL)
(72) Inventor: ZHANG, Zhiqiang, 5656 AE Eindhoven (NL)
(74) Representative: Kapoor, Pavan Puneet

(57) **Abstract**

An air purifier comprises a filter stack having, in order from the air intake side: a pre-filter, a first particulate filter, a general VOC filter, a target gas filter and a second particulate filter. A fan is between the pre-filter and the second particulate filter.

## Description

### FIELD OF THE INVENTION

This invention relates to air purifiers.

### BACKGROUND OF THE INVENTION

Indoor air quality is crucial for people's health, as people typically spend over 80% of their time indoors.

One important factor influencing indoor air quality is gaseous pollutants (e.g. formaldehyde) emitted from indoor sources such as furniture boards. It has been reported that high indoor formaldehyde is expected to be found in over 70% of newly decorated homes. Measures to improve indoor air quality are therefore required to prevent health problems such as so-called sick building syndrome.

A stand-alone air purifier is a very common device to improve the indoor air quality. Most indoor air purifiers are able to filtrate particulate pollutants (including PM2.5, bacteria, virus etc.) by using mature HEPA or HEPA-like filters. These filters provide efficacy and durability. However, for gaseous pollutants, laboratory test result (e.g. formaldehyde CADR) may suggest suitable performance levels, but the performance in a real environment may be found to be substantially inferior.

Issues arise due to the complexity of gases in real homes. For example, other VOCs in real homes may compete with a target pollutant (e.g. formaldehyde) to be filtered by gaseous absorbents in the purifier, hence the performance to a specific target pollutant (e.g. formaldehyde) is markedly reduced. The gaseous removal performance at normal gaseous pollutant concentration levels in real homes is thus typically lower than the performance determined at laboratory level concentrations (normally 10 times room concentration).

There remains a need for an air purifier with a filter architecture which is able to provide a total solution to the problem of indoor air pollution.

### SUMMARY OF THE INVENTION

The invention is defined by the claims.

According to examples in accordance with an aspect of the invention, there is provided an air purifier comprising:
an air intake port;
an air exhaust port;
a fan between the air intake port and the air exhaust port; and
a filter stack between the air intake port and the exhaust port, comprising in order from the air intake port:
   a pre-filter for coarse matter;
   a first particulate filter for particles of a first size range with a first maximum size;
   a general VOC filter;
   a target gas filter; and
   a second particulate filter for particles of a second size range, with a second maximum size smaller than the first maximum size,
wherein the fan is between the pre-filter and the second particulate filter.

The air purifier is for example a standalone air purifier for improving the indoor air quality. The filter configuration is able to filter particulate pollutants (for example including PM2.5, bacteria, virus etc.) and gaseous pollutants. The use of general and target gas filters (in that order) means the efficiency of the target gas filter is less influenced by other VOCs that are present in the air flow being purified. The filter design thus targets both a specific gaseous pollutant, as well as providing a more general solution to the problem of indoor air pollution. The particulate filters and the pre-filter are in order of decreasing maximum size, so that large particles are initially filtered to protect the next layers in the filter stack, and the filtering is targeted to progressively finer particulates along the flow direction.

The filter structure in particular addresses the issue that the target gas filter may have a short lifetime due to the influence of other VOCs in high pollution homes. It provides more balanced filter performance for different pollutants and may provide a universal filter structure which can be used in different home environments. However, there also remains the possibility to provide a customized function for different home environments, by selecting the required target gas filter for example.

The target gas filter for example comprises a formaldehyde filter or a NOx (e.g. NO2) filter. However, other target gases may of interest, depending on the requirements of the user of the air purifier, such as ammonia, hydrogen sulphide etc.

The pre-filter for example comprises a washable nylon mesh or a disposable electret filter.

The first particulate filter for example comprises a PM10 filter. This may collect dust, pollen, mold etc. The first particulate filter may comprise a F5 - F7 level particulate filter.

The first particulate filter may also include a bio-functional virus filter.

The general VOC filter for example comprises a porous gas absorbent filter. This is used to capture general gaseous pollutants without targeting a specific pollutant.

The general VOC filter for example has a removal capacity of at least 100 grams of VOC per year, when operating 24 hours per day.

The target gas filter for example comprises a catalyst filter or a chemisorption filter.

The target gas filter for example comprises a formaldehyde filter with a removal capacity of at least 30 grams per year when operating 24 hours per day.

The second particulate filter is for example a PM2.5 filter, for example a HEPA filter. It is downstream of the fan so is able to collect any small particles generated by the fan.

The second particulate filter for example has a removal capacity of at least 7.5g of PM2.5 per year when operating 24 hours per day.

The fan is for example between the target gas filter and the second particulate filter.

In one design, not all of the filters have the same recommended usage duration. For example, the recommended usage durations may comprise 3 years for the second particulate filter, 1 year for the first particulate filter, 1 year for the general VOC filter, and 6 months for the target gas filter. This enables the air purifier to be compact.

The fan may comprise an axial fan or a centrifugal fan.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:

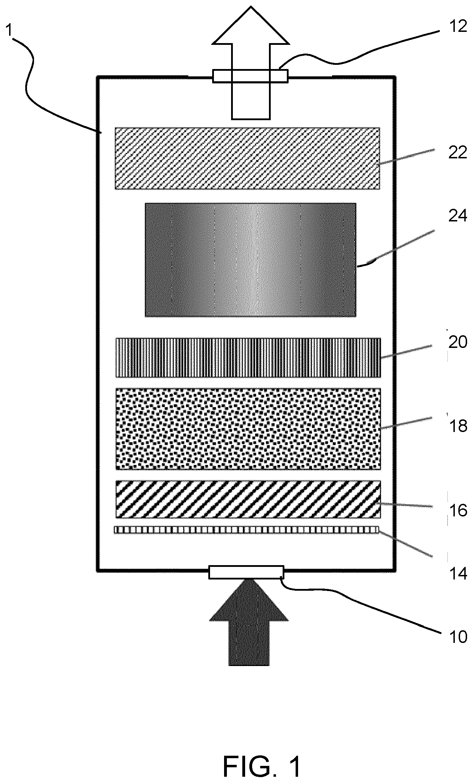

Figure 1 shows an air purifier in accordance with the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an air purifier which comprises a filter stack having, in order from the air intake side: a pre-filter, a first particulate filter, a general VOC filter, a target gas filter and a second particulate filter. A fan is between the pre-filter and the second particulate filter.

Figure 1 shows the air purifier comprising an air intake port 10 and an air exhaust port 12.

A filter stack is provided between the air intake port and the air exhaust port. In order from the air intake port 10, the filter stack comprises:
a pre-filter 14 for coarse matter;
a first particulate filter 16 for particles of a first size range with a first maximum size;
a general VOC filter 18;
a target gas filter 20; and
a second particulate filter 22 for particles of a second size range, with a second maximum size smaller than the first maximum size.

A fan 24 is located somewhere between the pre-filter 14 and the second particulate filter 22, and in this example only the second particulate filter 22 is downstream of the fan 24. The fan can be an axial fan or a backward curved centrifugal fan.

The air purifier is a standalone air purifier for improving the indoor air quality. The filter configuration is able to filter particulate pollutants (for example including PM2.5, bacteria, virus etc.) and gaseous pollutants. The use of general and target gas filters (in that order) means the efficiency of the target gas filter is less influenced by other VOCs that are present in the air flow being purified. The filter design thus targets both a specific gaseous pollutant, as well as providing a more general solution to the problem of indoor air pollution.

The filter structure addresses the issue that the target gas filter 20 may have a short lifetime due to the influence of other VOCs in high pollution homes. It provides more balanced filter performance for different pollutants and may provide a universal filter structure which can be used in different home environments.

The pre-filter 14 for example comprises a washable nylon mesh or a disposable electret filter. It is used to filter hairs and remove large dust particles to protect the subsequent filters and fan.

The first particulate filter is used to remove PM10 particulates, which are inhalable particles. It for example comprises a F5-F7 level particulate filter (40-90% average efficiency for 0.4µm particles). It may be a synthetic melt-blown filter or a washable PTFE filter. It also acts as a protector of the filters and fan which are further downstream.

The first particulate filter may also include a bio-functional virus filter.

The general VOC filter for example comprises a porous gas absorbent filter, such as an activated carbon filter. This is used to capture general gaseous pollutants without targeting a specific pollutant. It is used to filtrate indoor VOCs, including BTEX (benzene, toluene, ethylbenzene and xylene) which may influence the performance of a target gas filter such as a formaldehyde filter, and which may also have health implications for humans. Assuming a room of 30m³ with natural ventilation rate 0.6hr⁻¹ and an average VOC concentration of 1mg/m³, the VOC emission rate would be 18mg/m³. This roughly results in 114 grams of VOC for 24 hours per day continuously for 365 days. Thus, the general VOC filter should have the removal capacity of at least 100 grams of VOC (e.g. Toluene) to enable operation without maintenance for a year. This enables the subsequent target gas filter (e.g. formaldehyde) to be protected from other competitive gases.

The target gas filter for example comprises a catalyst filter or a chemisorption filter.

The target gas filter is arranged after the general VOC filter, and is for example specifically designed for formaldehyde. Assuming a room of 30m³ with natural ventilation rate 0.6hr-1 and an average formaldehyde concentration of 0.2mg/m³, the formaldehyde emission rate would be 3.6mg/m³. This roughly results in 31 grams of formaldehyde for 24 hours per day continuously for 365 days. Thus, the target filter, in the case of formaldehyde, should have the removal capacity of at least 30 grams of formaldehyde to enable operation without maintenance for a year.

The second particulate filter is for example a PM2.5 filter, for example a HEPA filter. It is provided to remove fine and ultrafine particles, and functions as the final filter stage. It removes not only the fine and ultrafine particles that have penetrated the previous filters, but also removes particles emitted from previous filters and parts. (e.g. from the fan motor) Assuming a room of 30m³ with natural ventilation rate 0.6hr⁻¹ and outdoor PM2.5 concentration of 151µg/m³ (i.e. heavily polluted), this will result in 7.5g of PM2.5 capacity for 24 hours per day continuously for 365 days. Thus, the second particulate filter should have a removal capacity of at least 7.5g of PM2.5 per year.

The particle removal can be easily achieved, and the VOC removal can be achieved when sufficient amounts of gas absorbent are used. For the target filter, in particular formaldehyde, it is more difficult to meet the removal target to enable maintenance free operation for a year.

To overcome this issue, different usage times may be defined for each filter. For example, the recommended usage durations may comprise 3 years for the second particulate filter, 1 year for the first particulate filter, 1 year for the general VOC filter, and 6 months for the target gas filter. This enables the air purifier to be compact and makes implementation of the filters more simple to achieve.

The target gas filter for example comprises a formaldehyde filter as mentioned above, but it may comprise a NOx (e.g. NO2) filter. Other target gases may of interest, depending on the requirements of the user of the air purifier, such as ammonia, hydrogen sulphide etc.

The invention relates to the filter stack. For this reason the fan control system and power supply have not been mentioned. The fan and control circuitry are entirely conventional.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An air purifier comprising:
an air intake port (10);
an air exhaust port (12);
a fan (24) between the air intake port and the air exhaust port; and
a filter stack between the air intake port and the exhaust port, comprising in order from the air intake port:
a pre-filter (14) for coarse matter;
a first particulate filter (16) for particles of a first size range with a first maximum size;
a general VOC filter (18) ;
a target gas filter (20); and
a second particulate filter (22) for particles of a second size range, with a second maximum size smaller than the first maximum size,
wherein the fan (24) is between the pre-filter (14) and the second particulate filter (22).

2. The air purifier of claim 1, wherein the pre-filter (14) comprises a washable nylon mesh or a disposable electret filter.

3. The air purifier of claim 1 or 2, wherein the first particulate filter (16) comprises a PM10 filter.

4. The air purifier of any one of claims 1 to 3, wherein the first particulate filter (16) comprises a F5 - F7 level particulate filter.

5. The air purifier of any one of claims 1 to 4, wherein the first particulate filter (16) includes a biofunctional virus filter.

6. The air purifier of any one of claims 1 to 5, wherein the general VOC filter (18) comprises a porous gas absorbent filter.

7. The air purifier of any one of claims 1 to 6, wherein the general VOC filter (18) has a removal capacity of at least 100 grams of VOC per year, when operating 24 hours per day.

8. The air purifier of any one of claims 1 to 7, wherein the target gas filter (20) comprises a catalyst filter or a chemisorption filter.

9. The air purifier of claim 8, wherein the target gas filter (20) comprises a formaldehyde filter with a removal capacity of at least 30 grams per year when operating 24 hours per day.

10. The air purifier of any one of claims 1 to 9, wherein the second particulate filter (22) is a PM2.5 filter, for example a HEPA filter.

11. The air purifier of claim 10, wherein the second particulate filter (22) has a removal capacity of at least 7.5g of PM2.5 per year when operating 24 hours per day.

12. The air purifier of any one of claims 1 to 11, wherein the fan (24) is between the target gas filter (20) and the second particulate filter (22).

13. The air purifier of any one of claims 1 to 12, wherein not all of the filters have the same recommended usage duration.

14. The air purifier of any preceding claim, wherein the recommended usage durations comprise 3 years for the second particulate filter, 1 year for the first particulate filter, 1 year for the general VOC filter, and 6 months for the target gas filter.

15. The air purifier of any one of claims 1 to 14, wherein the fan (24) comprises an axial fan or a centrifugal fan.
